# EUROPEAN PATENT APPLICATION

(11) **EP 4 124 108 A1**
(43) Date of publication of application: **25.01.2023**
(21) Application number: 21771933.5
(22) Date of filing: 04.03.2021
(51) Int. Cl.: H04W 36/00

(54) **NON-STANDALONE NETWORK ACCESS METHOD AND APPARATUS, AND TERMINAL AND COMPUTER-READABLE STORAGE MEDIUM**

(30) Priority: 17.03.2020 CN 202010187438
(71) Applicant: ZTE Corporation, Shenzhen, Guangdong 518057 (CN)
(72) Inventor: HE, Lifang, Shenzhen, Guangdong 518057 (CN); CAO, Yijin, Shenzhen, Guangdong 518057 (CN); HOU, Jun, Shenzhen, Guangdong 518057 (CN)
(74) Representative: Aipex B.V.
(86) International application number: PCT/CN2021/079033
(87) International publication number: WO 2021/185092

(57) **Abstract**

Provided are a non-standalone network access method and apparatus, a user equipment and a computer-readable storage medium. The method includes acquiring the historical selection data of at least one non-standalone (NSA) node in a non-standalone network; determining at least one candidate NSA node and the order of the at least one candidate NSA node according to the historical selection data; and successively attempting to access, by multiple candidate NSA nodes, the non-standalone network according to the order until one of the at least one candidate NSA node successfully accesses the non-standalone network.

## Description

### TECHNICAL FIELD

The present application relates to radio communication networks, for example, a non-standalone network access method and apparatus, a user equipment and a computer-readable storage medium.

### BACKGROUND

The fifth-generation mobile communication (5G) technology has two networking modes: non-standalone (NSA) and standalone (SA). An NSA network can achieve a large-area network coverage and has been widely used. In an NSA network, after a user equipment (UE) accesses a Long-Term Evolution (LTE) cell, an NSA node is selected and used as a secondary node (SN), and the bearer of the LTE is migrated to the NSA node so that the NSA node can be used for performing data transmission. At present, the LTE and the network side can measure and report a certain NSA node and if conditions permit, attempt to establish a connection with the NSA node or perform blind selection or random access between at least one NSA node. An NSA node accessed by use of these methods has randomness and uncertainty and may not have the optimal performance, resulting in access failure or instability and affecting the reliability of data transmission.

### SUMMARY

The present application provides a non-standalone network access method and apparatus, a user equipment and a computer-readable storage medium to improve the success rate of a non-standalone network accessed by NSA nodes and the reliability of data transmission.

Embodiments of the present application provide a non-standalone network access method. The method includes the steps below.

Historical selection data of at least one non-standalone (NSA) node in a non-standalone network is acquired.

At least one candidate NSA node and an order of the at least one candidate NSA node are determined according to the historical selection data.The at least one candidate NSA node is successively attempted to access the non-standalone network according to the order until one of the at least one candidate NSA node successfully accesses the non-standalone network.

Embodiments of the present application provide a non-standalone network access apparatus. The apparatus includes a data acquisition module, a node selection module and an access module.

The data acquisition module is configured to acquire historical selection data of at least one non-standalone (NSA) node in a non-standalone network.

The node selection module is configured to determine at least one candidate NSA node and an order of the at least one candidate NSA node according to the historical selection data.

The access module is configured to successively attempt to access the multiple candidate NSA nodes to the non-standalone network according to the order until one of the at least one candidate NSA node successfully accesses the non-standalone network.

Embodiments of the present application further provide a user equipment. The user equipment includesat least one processor and a storage device configured to store at least one program. When executed by the at least one processor, the at least one program causes the at least one processor to perform the preceding non-standalone network access method.Embodiments of the present application further provide a computer-readable storage medium storing a computer program which, when executed by a processor, causes the processor to perform the preceding non-standalone network access method.

Embodiments of the present application provide a non-standalone network access method and apparatus, a user equipment and a computer-readable medium. The method includes acquiring the historical selection data of the at least one NSA node in the non-standalone network; determining the at least one candidate NSA node and the order of the at least one candidate NSA node according to the historical selection data; and successively attempting to access the at least one candidate NSA node to the non-standalone network according to the order until the one of the at least one candidate NSA node successfully accesses the non-standalone network. The NSA nodes ranking top are preferentially accessed so that the success rate of the non-standalone network accessed by NSA nodes and the reliability of data transmission can be improved.

### BRIEF DESCRIPTION OF DRAWINGS

FIG. 1 is a flowchart of a non-standalone network access method according to an embodiment.
FIG. 2 is a flowchart of a non-standalone network access method according to another embodiment.
FIG. 3 is a diagram illustrating the structure of a non-standalone network access apparatus according to an embodiment.
FIG. 4 is a diagram illustrating the hardware structure of a user equipment according to an embodiment.

### DETAILED DESCRIPTION

In embodiments of the present application, a non-standalone network access method is provided. NSA nodes ranking top are preferentially accessed according to the historical selection data of NSA nodes so that the NSA node having the optimal historical access status can be selected, improving the success rate of accessing a non-standalone network and thereby improving the reliability of data transmission.

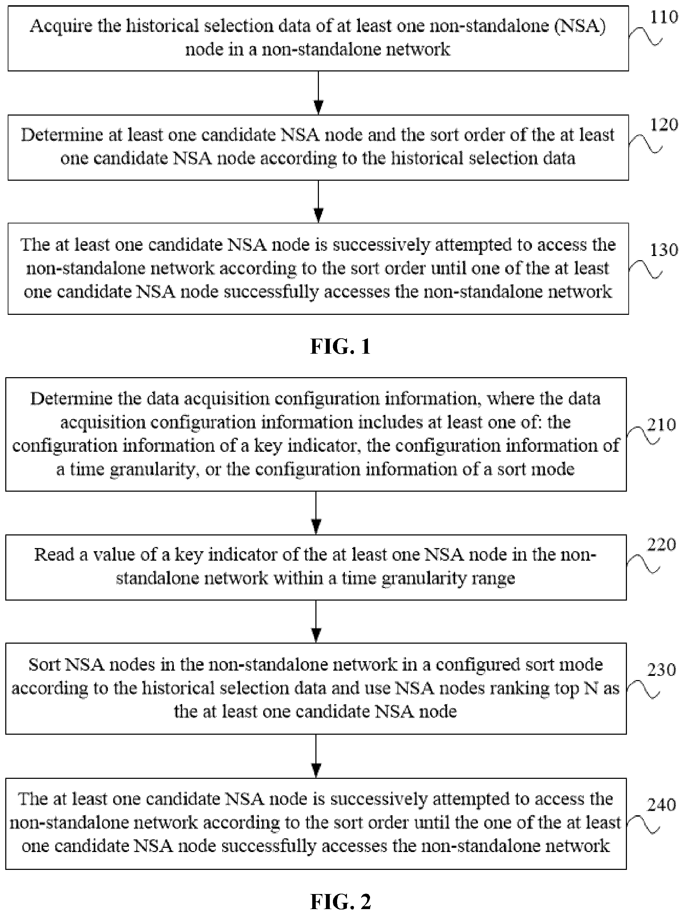

FIG. 1 is a flowchart of a non-standalone network access method according to an embodiment. As shown in FIG. 1, the method according to this embodiment includes S110 to S130.

In S110, the historical selection data of at least one non-standalone (NSA) node in a non-standalone network is acquired.

In S120, at least one candidate NSA node and the order of the at least one candidate NSA node are determined according to the historical selection data.

In S130, the at least one candidate NSA node is successively attempted to access the non-standalone network according to the order until one of the at least one candidate NSA node successfully accesses the non-standalone network.

In this embodiment, there is at least one NSA node in the non-standalone network. After the UE accesses the cell, an NSA node is selected and added as an SN, and the bearer of the UE is migrated to the NSA node so that data transmission can be performed. If the NSA node is unstable or the link fails, the UE may also release the NSA node and replace the NSA node with another NSA node having better performance. The historical selection data is used for reflecting a situation in which at least one NSA node is selected and used as the SN or accessed by a user equipment within a period of time in the past, for example, the number of times or the success rate of at least one NSA node being added as the SN, the number of times or the success rate of at least one NSA node being released and the number of times of failures of at least one NSA being modified.

The at least one candidate NSA node and the order of the at least one candidate NSA node may be determined according to the historical selection data. For example, NSA nodes in the non-standalone network are sorted in the descending order of the number of times of being added or in the descending order of the success rates, at least one NSA node ranking top is selected and used as a candidate NSA node, and the at least one NSA node is still sorted in the descending order of the number of times of being added or in the descending order of the success rates so that the UE can preferentially attempt to access the NSA node having the largest number of times of being added or the highest success rate; and if the access fails, the LTE continues to attempt to access the next NSA node according to the order until the non-standalone network is successfully accessed. For another example, at least one NSA node having the smallest number of times of being released is used as a candidate NSA node, and the at least one NSA node is sorted in the ascending order of the number of times of being released so that the UE can preferentially attempt to access the NSA node having the smallest number of times of being released, thereby preventing the accessed NSA node from affecting data transmission due to being released; and if the access fails, the UE continues to attempt to access the next NSA node according to the order until the non-standalone network is successfully accessed. Based on this, the LTE can access the non-standalone network through the candidate NSA node having the optimal performance so that the success rate and the stability of access can be improved, and stable data transmission can be performed.

In the method of this embodiment, the candidate NSA nodes ranking top can be adaptively selected for preferential access according to the historical selection data of the NSA nodes, and the NSA node having the optimal historical access status is selected from the network so that the success rate of accessing the non-standalone network can be improved, and thereby the reliability of data transmission can be improved.

FIG. 2 is a flowchart of a non-standalone network access method according to another embodiment. As shown in FIG. 2, the method according to this embodiment includes S210 to S240.

In S210, the data acquisition configuration information is determined, where the data acquisition configuration information includes at least one of: the configuration information of a key indicator, the configuration information of a time granularity, or the configuration information of a sort mode.

In this embodiment, before the historical selection data is acquired, a configured module may further determine the data acquisition configuration information. The data acquisition configuration information determines which kind of historical selection data is acquired and which kind of strategy to select the NSA nodes. The data acquisition configuration information may include at least one of the configuration information of the key indicator, the configuration information of the time granularity, or the configuration information of the sort mode. The configuration information of the key indicator is used for specifying which key indicator is used as the basis for selecting the NSA nodes, and at least one key indicator may be provided. The configuration information of the time granularity is used for specifying the time range of the historical selection data required to be acquired. For example, when the time granularity is 15 minutes, values of a key indicator of each NSA node in the non-standalone network in the past 15 minutes are required to be acquired. The configuration information of the sort mode is used for specifying which rule to sort the at least one NSA node, including a comprehensive sort strategy for multiple key indicators and a separate sort strategy for one key indicator. Before the historical selection data of the at least one NSA node in the non-standalone network is acquired, the UE first determines the data acquisition configuration information that may be autonomously configured by the UE, configured by a base station, or predefined by a protocol.

In S220, a value of a key indicator of the at least one NSA node in the non-standalone network within a time granularity range is read.

After determining the data acquisition configuration information, the UE reads the values of a key indicator within the latest time granularity from a base station according to the indicated content and sorts the at least one NSA node in a configured sort mode according to the values of the key indicator within the latest time granularity.

In S230, NSA nodes in the non-standalone network are sorted in a configured sort mode according to the historical selection data, and NSA nodes ranking top N are used as the at least one candidate NSA node.

In this embodiment, N is a positive integer, and the order of the at least one candidate NSA node is consistent with the order of the NSA nodes ranking top N.

In S240, the at least one candidate NSA node is successively attempted to access the non-standalone network according to the order until the one of the at least one candidate NSA node successfully accesses the non-standalone network.

In the method of this embodiment, through the configured key indicator, the configured time granularity and the configured sort mode, the UE can read the historical selection data in a targeted manner, make a quick and effective decision and obtain the candidate NSA nodes having the optimal performance. The candidate NSA nodes ranking top are preferentially accessed in the access process so that the success rate of accessing the non-standalone network can be improved, and thereby the reliability of data transmission can be improved.

In an embodiment, the key indicator includes at least one of: the number of times of SN addition, the SN addition success rate, the number of times of SN release, the SN release success rate, the number of times of SN change, the SN change success rate, or the number of times of SN modification failure.

In this embodiment, the number of times of SN addition refers to, for example, the number of times an NSA node is added as an SN within a time granularity range; the SN addition success rate refers to, for example, the success rate of an NSA node being added as an SN within a time granularity range; the number of times of SN release refers to, for example, the number of times an NSA node is released within a time granularity range; the SN release success rate refers to, for example, the success rate of an NSA node being released within a time granularity range; the number of times of SN change refers to, for example, the number of times an NSA node is changed within a time granularity range. For example, an NSA node 1 is originally added as an SN, but since the signal of an NSA node 2 is better than the signal of the NSA node 1, the SN is changed to the NSA node 2, and a change occurs. The SN change success rate refers to, for example, the success rate of an NSA node is changed to an SN within a time granularity range; the number of times of SN modification failure refers to, for example, the number of times an NSA node fails to be modified within a time granularity range. For example, an NSA node has been added as an SN and needs to be updated due to changes in its configuration, so the NSA node is modified once.

In an embodiment, the sort mode includes that in response to one key indicator, the least one candidate NSA node in the non-standalone network is sorted in the descending order of values of the one key indicator or the ascending order of the values of the one key indicator.

For example, the key indicator includes the number of times of SN addition. The larger number of times of SN addition an NSA node has in a time granularity range, the better the performance, and the higher the ranking. For another example, the key indicator includes the number of times of SN release. The larger number of times of SN release an NSA node has in a time granularity range, the more stable the connection, the better the performance, and the higher the ranking.

In an embodiment, the sort mode includes that in response to multiple key indicators, the at least one candidate NSA node in the non-standalone network is sorted according to the priority order of the multiple key indicators in the descending order of values of each key indicator or the ascending order of values of each key indicator; or weighted calculation is performed on values of the multiple key indicators with regard to each of the at least one candidate NSA in the non-standalone network, and the at least one candidate NSAnode is sorted according to a result of the weighted calculation.

For example, the key indicator includes the number of times of SN addition and the SN addition success rate. The larger number of times an NSA node is added as an SN within a time granularity range, and the higher the addition success rate, the better the performance, and the higher the ranking. For another example, the key indicator includes the number of times of SN release and the SN release success rate. The smaller number of times an NSA node is released in a time granularity range, and the lower the release success rate, the more stable the connection, the better the performance, and the higher the ranking.

In this embodiment, the comprehensive sort strategy for the multiple key indicators includes a sort strategy based on weight values and an sort strategy based on priorities. The sort strategy based on weight values means that a certain weight value is assigned to each key indicator, weighted calculation is performed on values (or variations) of the multiple key indicators, and the at least one candidate NSA node is sorted according to a result of the weighted calculation. The sort strategy based on priorities means that priority information is specified for the multiple key indicators, the at least one candidate NSA node is first sorted according to the key indicators having the highest priority, and if the values of the key indicators are the same, the at least one candidate NSA node is then sorted according to the values of key indicators having the second highest priority, and so on.

In an example, in the case where the sorting is performed according to the sort strategy based on weight values, the method further includes that the values of the multiple key indicators are normalized so that the units of the values of the multiple key indicators can be unified, and the fairness of comparison can be ensured; or weighted sum is performed on the rankings of the multiple key indicators (for example, Example 3 described below) so that the uniform and fair sort can also be achieved; in addition, variations may also be made to the values of the multiple key indicators, for example, taking the reciprocal and calculating the difference with a reference quantity, so that the comparison standards can be unified. For example, the higher the SN addition success rate, the better, and the smaller the number of times of SN release, the better. Therefore, the difference between the reference quantity (the reference quantity is 1) and the value of the SN addition success rate can be calculated so that the NSA node having a smaller sum value can have a better performance after the weighted sum of the two key indicators is calculated.

The access process of the non-standalone network is described below using different examples.

### Example one:

In S 1, the data acquisition configuration information is determined, where the key indicator includes the SN addition success rate; the sort mode is to perform the sorting in the descending order of the SN addition success rates; and the time granularity is 15 minutes.

In S2, the UE accesses the cell (LTE1), triggers the selection of NSA nodes and according to the data acquisition configuration information, reads the SN addition success rate of the at least one NSA node in the non-standalone network within the latest 15 minutes. Table 1 describes the SN addition success rate of the at least one NSA node in the non-standalone network. As described in Table 1, there are three NSA nodes in the LTE1 cell.

**Table 1 SN addition success rate of NSA node in the non-standalone network**

| Adjacency Relation Pair | SN Addition Success Rate |
|---|---|
| LTE1:NSA1 | 75% |
| LTE1:NSA2 | 99% |
| LTE1:NSA3 | 10% |

In S3, the sorting is performed in the descending order of the SN addition success rates, the top N (N = 3) NSA nodes are determined as candidate NSA nodes, and the candidate NSA nodes are successively NSA2, NSA1 and NSA3.

In S4, the UE successively attempts to access NSA2, NSA1 and NSA 3 until the non-standalone network is successfully accessed.

### Example two:

In S 1, the data acquisition configuration information is determined, where the key indicators include the number of times of SN addition, the SN addition success rate, the SN change success rate and the number of times of SN release; the time granularity is 15 minutes; the sort mode is the sort strategy based on priorities of key indicators, and the preceding key indicators in the descending priority order are successively the number of times of SN addition, the SN addition success rate, the SN change success rate and the number of times of SN release, so the at least one NSA node is first sorted in the descending order of the number of times of SN addition, then in the descending order of the SN addition success rates, then in the descending order of the SN change success rates and last according to the number of times of SN release.

In S2, the UE accesses the cell (LTE1), triggers the selection of NSA nodes and according to the data acquisition configuration information, reads the number of times of SN addition, the SN addition success rate, the SN change success rate and the number of times of SN release of the at least one NSA node in the non-standalone network within the latest 15 minutes. Table 2 describes the values of key indicators of NSA nodes in the non-standalone network. As described in Table 2, there are three NSA nodes in the LTE1 cell.

**Table 2 Value of key indicator of NSA node in the non-standalone network**

| Adj acency Relation Pair | The Number of Times of SN Addition | SN Addition Success Rate | SN Change Success Rate | The Number of Times of SN Release |
|---|---|---|---|---|
| LTE1:NSA1 | 5 | 100% | 100% | 3 |
| LTE1:NSA2 | 6 | 95% | 60% | 4 |
| LTE1:NSA3 | 6 | 60% | 60% | 5 |

In S3, according to a configured sort mode, the at least one NSA node is first sorted in the descending order of the number of times of SN addition, then in the descending order of the SN addition success rates, then in the descending order of the SN change success rates and last according to the number of times of SN release.

Table 3 describes a sort result of the at least one NSA node in the non-standalone network according to multiple key indicators. As described in Table 3, the sort result according to the number of times of SN addition is NSA2 and NSA3 in parallel, and then NSA1; NSA2 and NSA3 in parallel are sorted according to the SN addition success rate, and the result is NSA2 ranking first and NSA3 ranking last, so the final order is NSA2, NSA3 and NSA1.

**Table 3 Sort result of NSA node in the non-standalone network according to multiple key indicators**

| Adj acency Relation Pair | Order of the Number of Times of NSA Node Addition | Order of NSA Node Addition Success Rate | Order of SN Change Success Rate | Order of the Number of Times of SN Release |
|---|---|---|---|---|
| LTE1:NSA1 | 2 | - | - | - |
| LTE1:NSA2 | 1 | 1 | - | - |
| LTE1:NSA3 | 1 | 2 | - | - |

The top N (N = 3) NSA nodes are determined as candidate NSA nodes, and the candidate NSA nodes are successively NSA2, NSA3 and NSA1.

In S4, the UE successively attempts to access NSA2, NSA3 and NSA 1 until the non-standalone network is successfully accessed.

### Example three:

In S1, the data acquisition configuration information is determined, where the key indicators include the number of times of SN addition, the SN addition success rate, the SN change success rate and the number of times of SN release; the time granularity is 15 minutes; and the sort mode is the sort strategy based on weighted calculation, and for each NSA node, weighted sum is performed on values (or variations) of multiple key indicators of each NSA node to obtain a corresponding result of the weighted calculation, and the sorting is performed according to the result of the weighted calculation.

In S2, the UE accesses the cell (LTE1), triggers the selection of NSA nodes and according to the data acquisition configuration information, reads the number of times of SN addition, the SN addition success rate, the SN change success rate and the number of times of SN release of the at least one NSA node in the non-standalone network within the latest 15 minutes. There are three NSA nodes in the LTE1 cell, and the read values of key indicators of the three NSA nodes in the non-standalone network are the same as the values in Table 2 of the preceding example.

In S3, according to a configured sort mode, for each NSA node, weighted sum is performed on values (or variations) of multiple key indicators of the each NSA node to obtain a corresponding result of the weighted calculation, and the sorting is performed according to the result of the weighted calculation.

Exemplarily, in this example, the weight values corresponding to the preceding four key indicators are successively 0.3, 0.4, 0.2 and 0.1, and the values of the key indicators are changed to rankings. Table 4 describes the rankings of three NSA nodes in the non-standalone network according to multiple key indicators.

**Table 4 Rankings of three NSA nodes in the non-standalone network according to multiple key indicators**

| Adj acency Relation Pair | Ranking of the Number of Times of NSA Node Addition | Ranking of NSA Node Addition Success Rate | Ranking of SN Change Success Rate | Ranking of the Number of Times of SN Release |
|---|---|---|---|---|
| LTE1:NSA1 | 2 | 1 | 1 | 1 |
| LTE1:NSA2 | 1 | 2 | 2 | 2 |
| LTE1:NSA3 | 1 | 3 | 2 | 3 |

As shown in Table 4, the rankings obtained in the descending order of the number of times of SN addition are successively 2, 1 and 1 (NSA2 and NSA3 in parallel; the rankings obtained in the descending order of the SN addition success rates are successively 1, 2 and 3; the rankings obtained in the descending order of the SN change success rates are successively 1, 2 and 2 (NSA2 and NSA3 in parallel); the rankings obtained in the ascending order of the SN release success rates are successively 1, 2 and 3.

The result of the weighted calculation for NSA1 is 2*0.3 + 1*0.4 + 1*0.2 + 1 *0.1 = 1.3; the result of the weighted calculation for NSA2 is 1*0.3 + 2*0.4 + 2*0.2 + 2*0.1 = 1.7; the result of the weighted calculation for NSA3 is 1*0.3 + 3*0.4 + 2*0.2 + 3*0.1 = 2.2. The smaller the value of the ranking (that is, the weighted sum), the better the performance, so the final order is NSA1, NAS2 and NSA3. The top N (N = 3) NSA nodes are determined as candidate NSA nodes, and the candidate NSA nodes are successively NSA1, NSA2 and NSA3.

In S4, the UE successively attempts to access NSA1, NSA2 and NSA 3 until the non-standalone network is successfully accessed.

In the method of this embodiment, through the configured key indicator, the configured time granularity and the configured sort mode, the UE can read the historical selection data in a targeted manner, make a quick and effective decision and use different sort modes for one key indicator and multiple key indicators in conjunction with normalization and the variations of the values of key indicators to obtain the candidate NSA nodes having the optimal performance so that the flexibility in the NSA node selection can be improved. The candidate NSA nodes ranking top are preferentially accessed in the access process so that the success rate of accessing the non-standalone network can be improved, and thereby the reliability of data transmission can be improved.

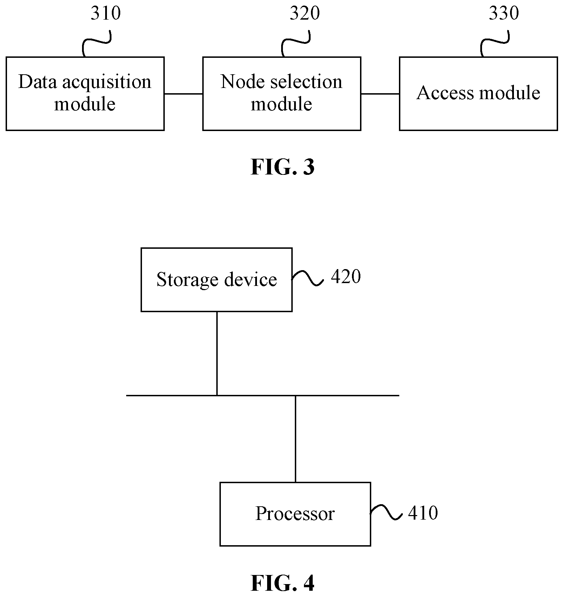

Embodiments of the present application further provide a non-standalone network access apparatus. FIG. 3 is a diagram illustrating the structure of a non-standalone network access apparatus according to an embodiment. As shown in FIG. 3, the non-standalone network access apparatus includes a data acquisition module 310, a node selection module 320 and an access module 330.

The data acquisition module 310 is configured to acquire the historical selection data of at least one non-standalone (NSA) node in a non-standalone network.

The node selection module 320 is configured to determine at least one candidate NSA node and the order of the at least one candidate NSA node according to the historical selection data.

The access module 330 is configured to successively attempt to access the at least one candidate NSA node to the non-standalone network according to the order until one of the at least one candidate NSA node successfully accesses the non-standalone network.

In this embodiment, the non-standalone network apparatus can adaptively select the candidate NSA nodes ranking top for preferential access according to the historical selection data of the NSA nodes, and the NSA node having the optimal historical access status is selected from the network so that the success rate of accessing the non-standalone network can be improved, and thereby the reliability of data transmission can be improved.

In an embodiment, the apparatus further includes a configuration module.

The configuration module is configured to determine the data acquisition configuration information before the historical selection data of the at least one NSA node in the non-standalone network is acquired, where the data acquisition configuration information includes at least one of: the configuration information of a key indicator, the configuration information of a time granularity, or the configuration information of a sort mode.

In an embodiment, the data acquisition module 310 is configured to read a value of the key indicator of NSA nodes in the non-standalone network within a time granularity range.

In an embodiment, the sort mode includes that in response to one key indicator, the at least one candidate NSA node in the non-standalone network is sorted in the descending order of values of the one key indicator or the ascending order of the values of the one key indicator.

In an embodiment, the sort mode includes that in response to multiple key indicators, the at least one candidate NSA node in the non-standalone network is sorted according to the priority order of the multiple key indicators in the descending order of values of each key indicator or the ascending order of values of each key indicator; or weighted calculation is performed on values of the multiple key indicators with regard to each of the at least one candidate NSA node in the non-standalone network, and the at least one candidate NSA node is sorted according to a result of the weighted calculation.

In an embodiment, the key indicator includes at least one of: the number of times of SN addition, the SN addition success rate, the number of times of SN release, the SN release success rate, the number of times of SN change, the SN change success rate, or the number of times of SN modification failure.

In an embodiment, the node selection module 320 is configured to sort NSA nodes in the non-standalone network in a configured sort mode according to the historical selection data and use NSA nodes ranking top N as the at least one candidate NSA node, where N is a positive integer, and the order of the at least one candidate NSA nodes is consistent with the order of the NSA nodes ranking top.

The non-standalone network access apparatus according to this embodiment and the non-standalone network access method according to the preceding embodiments belong to the same concept. For technical details not described in detail in this embodiment, reference may be made to any one of the preceding embodiments.

Embodiments of the present application further provide a user equipment. The non-standalone network access method is executable by the non-standalone network access apparatus. The apparatus may be implemented by software and/or hardware and integrated in the user equipment.

FIG. 4 is a diagram illustrating the hardware structure of a user equipment according to an embodiment. As shown in FIG. 4, the user equipment according to this embodiment includes a processor 410 and a storage device 420. The user equipment may include at least one processor. One processor 410 is shown as an example in FIG. 4. The processor 410 and the storage device 420 in the device may be connected via a bus or in other manners. The connection via a bus is shown as an example in FIG. 4.

When executed by the at least one processor 410, at least one program causes the at least one processor to perform the non-standalone network access method according to any one of the preceding embodiments.

As a computer-readable storage medium, the storage device 420 in the user equipment may be configured to store at least one program that may be software programs, computer-executable programs and modules, such as program instructions/modules (for example, modules in the non-standalone network access apparatus as shown in FIG. 3, including the data acquisition module 310, the node selection module 320 and the access module 330) corresponding to the non-standalone network access method in the embodiments of the present application. The processor 410 executes software programs, instructions, and modules stored in the storage device 420 to perform various function applications and data processing of the user equipment, that is, to perform the non-standalone network access method in the preceding method embodiments.

The storage device 420 mainly includes a program storage region and a data storage region. The program storage region may store an operating system and an application program required by at least one function. The data storage region may store data (such as the historical selection data and the candidate NSA nodes in the preceding embodiments) created based on use of the equipment. In addition, the storage device 420 may include a high-speed random-access memory and may further include a nonvolatile memory, such as at least one disk memory, a flash memory, or another nonvolatile solid-state memory. In some examples, the storage device 420 may include memories that are remotely disposed with respect to the processor 410. These remote memories may be connected to the user equipment via a network. Examples of the preceding network include, but are not limited to, the Internet, an intranet, a local area network, a mobile communication network and a combination thereof.

Moreover, when the preceding user equipment includes that the at least one program is executed by the at least one processor 410, the following operations are performed: The historical selection data of at least one non-standalone (NSA) node in a non-standalone network is acquired; at least one candidate NSA node and the order of the at least one candidate NSA node are determined according to the historical selection data; and the at least one candidate NSA node is successively attempted to access the non-standalone network according to the order until one of the at least one candidate NSA node successfully accesses the non-standalone network.

The user equipment according to this embodiment and the non-standalone network access method according to the preceding embodiments belong to the same concept. For technical details not described in detail in this embodiment, reference may be made to any one of the preceding embodiments.

Embodiments of the present application further provide a storage medium including computer-executable instructions which, when executed by a computer processor, cause the computer processor to perform a non-standalone network access method. The method includes acquiring the historical selection data of at least one non-standalone (NSA) node in a non-standalone network; determining at least one candidate NSA node and the order of the at least one candidate NSA node according to the historical selection data; and successively attempting to access the at least one candidate NSA node to the non-standalone network according to the order until one of the at least one candidate NSA node successfully accesses the non-standalone network.

From the preceding description of embodiments, it is apparent to those skilled in the art that the present application may be implemented by use of software and general-purpose hardware or may be implemented by hardware. Based on this understanding, the technical solutions of the present application may be embodied in the form of a software product. The computer software product may be stored in a computer-readable storage medium, such as a floppy disk, a read-only memory (ROM), a random-access memory (RAM), a flash memory, a hard disk, or an optical disk of a computer and includes multiple instructions for causing a computer device (which may be a personal computer, a server, or a network device) to perform the method in any embodiment of the present application.

The preceding are only example embodiments of the present application and not intended to limit the scope of the present application.

A block diagram of any logic flow in the drawings of the present application may represent program steps, or may represent interconnected logic circuits, modules, and functions, or may represent a combination of program steps and logic circuits, modules, and functions. Computer programs may be stored in a memory. The memory may be of any type suitable for the local technical environment and may be implemented by using any suitable data storage technology, such as, but not limited to, a ROM, a RAM, an optical storage device and system (a digital video disc (DVD) or a compact disc (CD)), and the like. Computer-readable media may include non-transitory storage media. The data processor may be of any type suitable for the local technical environment, such as, but not limited to, a general purpose computer, a special purpose computer, a microprocessor, a digital signal processor (DSP), an application specific integrated circuit (ASIC), a field programmable gate array (FPGA), and a processor based on a multi-core processor architecture.

## Claims

1. A non-standalone network access method, comprising:
acquiring historical selection data of at least one non-standalone, NSA, node in a non-standalone network;
determining at least one candidate NSA node and an order of the at least one candidate NSA node according to the historical selection data; and
successively attempting to access the at least one candidate NSA node to the non-standalone network according to the order until one of the at least one candidate NSA node successfully accesses the non-standalone network.

2. The method according to claim 1, before acquiring the historical selection data of the at least one NSA node in the non-standalone network, the method further comprising:
determining data acquisition configuration information, wherein the data acquisition configuration information comprises at least one of: configuration information of a key indicator, configuration information of a time granularity, or configuration information of a sort mode.

3. The method according to claim 2, wherein acquiring the historical selection data of the at least one NSA node in the non-standalone network comprises:
reading a value of a key indicator of the at least one NSA node in the non-standalone network within a time granularity range.

4. The method according to claim 2, wherein the sort mode comprises:
in response to one key indicator, sorting the least one candidate NSA node in the non-standalone network in a descending order of values of the one key indicator or an ascending order of values of the one key indicator.

5. The method according to claim 2, wherein the sort mode comprises:
in response to a plurality of key indicators, sorting the at least one candidate NSA node in the non-standalone network in a descending order of values of each of the plurality of key indicators or an ascending order of values of each of the plurality of key indicators according to a priority order of the plurality of key indicators; or,
in response to a plurality of key indicators, performing weighted calculation on values of the plurality of key indicators with regard to each of the at least one candidate NSA in the non-standalone network and sorting the at least one candidate NSA node according to a result of the weighted calculation.

6. The method according to claim 2, wherein the key indicator comprises at least one of:
a number of times of secondary node (SN) addition, an SN addition success rate, a number of times of SN release, an SN release success rate, a number of times of SN change, an SN change success rate, or a number of times of SN modification failure.

7. The method according to any one of claims 1 to 6, wherein determining the at least one candidate NSA node and the order of the at least one candidate NSA node according to the historical selection data comprises:
sorting NSA nodes in the non-standalone network in a configured sort mode according to the historical selection data and using NSA nodes ranking top N as the at least one NSA node,
wherein N is a positive integer, and an order of the at least one candidate NSA node is consistent with an order of the NSA nodes ranking top N.

8. A non-standalone network access apparatus, comprising:
a data acquisition module configured to acquire historical selection data of at least one non-standalone (NSA) node in a non-standalone network;
a node selection module configured to determine at least one candidate NSA node and an order of the at least one candidate NSA node according to the historical selection data; and
an access module configured to successively attempt to access the at least one candidate NSA node to the non-standalone network according to the order until one of the at least one candidate NSA node successfully accesses the non-standalone network.

9. A user equipment, comprising:
at least one processor; and
a storage device configured to store at least one program;
wherein when executed by the at least one processor, the at least one program causes the at least one processor to perform the non-standalone network access method according to any one of claims 1 to 7.

10. A computer-readable storage medium storing a computer program which, when executed by a processor, causes the processor to perform the non-standalone network access method according to any one of claims 1 to 7.
